(19) Europäisches Patentamt
European Patent Office
Office européen des brevets

(11) Veröffentlichungsnummer: **0 081 081**
**B1**

(12) # EUROPÄISCHE PATENTSCHRIFT

(45) Veröffentlichungstag der Patentschrift: **11.03.87**

(51) Int. Cl.⁴: **H 01 S 3/03**, H 01 S 3/097

(21) Anmeldenummer: **82110042.7**

(22) Anmeldetag: **30.10.82**

(54) **Verfahren und Vorrichtung zum Betreiben eines CO2-Gaslasers.**

(30) Priorität: **08.12.81 DE 3148570**

(43) Veröffentlichungstag der Anmeldung: **15.06.83 Patentblatt 83/24**

(45) Bekanntmachung des Hinweises auf die Patenterteilung: **11.03.87 Patentblatt 87/11**

(84) Benannte Vertragsstaaten: **CH DE FR GB IT LI NL SE**

(56) Entgegenhaltungen:
**EP - A - 0 059 229**
**GB - A - 2 028 571**
**GB - A - 2 083 944**

(73) Patentinhaber: **ELTRO GmbH Gesellschaft für Strahlungstechnik, Kurpfalzring 106 Postfach 10 21 20, D-6900 Heidelberg 1 (DE)**

(72) Erfinder: **Karning, Heinrich, Albert-Fritz-Strasse 6, D-6900 Heidelberg (DE)**
Erfinder: **Prein, Franz, Tulpenweg 3, D-6901 Waldhilsbach (DE)**

(74) Vertreter: **Muschka, Wilhelm, Dipl.-Ing., Eltro GmbH Gesellschaft für Strahlungstechnik Kurpfalzring 106 Postfach 10 21 20, D-6900 Heidelberg 1 (DE)**

EP 0 081 081 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren und eine Vorrichtung zum Betreiben eines $CO_2$-Gaslasers nach dem Oberbegriff des Anspruchs 1.

Ein solcher Gaslaser ist Gegenstand des Dokuments GB-A-2 028 571. Er enthält einen Palladium- oder Platinkatalysator, der auf Zinn (IV) Oxid als Träger aufgebracht ist. Dieses Gebilde besteht seiner Konsistenz nach aus Partikeln, die aus einem Gel gewonnen wurden. Das Ganze wird von einer porösen Struktur aus $Al_2 O_3$ oder $Si O_2$ zusammengehalten. Der Träger(körper) besteht einmal aus einzelnen Partikeln, jedoch sind weder Träger noch Partikel als porös ausgewiesen. Die Porosität bezieht sich vielmehr auf das im wesentlichen eine Zusammenhaltfunktion ausübende $Al_2 O_3$ oder $Si O_2$. Damit dieser Katalysator überhaupt funktioniert ist dieses Aluminat oder Silikat porös. Ein solcher Katalysator ist herstellungsmässig vergleichsweise aufwendig und auch weniger aktiv. Darüberhinaus ist ein mit ihm bestückter Gaslaser nicht für alle Umweltbedingungen geeignet, da bei tiefen, das heisst deutlich unter 0°C liegenden Temperaturen, die Aktivität der Oberflächen eine Steigerung erfahren muss, (wofür entsprechende Massnahmen jedoch nicht erkennbar sind). Hinweise die eine Konditionierung der Oberflächen für solche spezifische Reaktionen erkennen liessen, sind dieser Schrift jedoch nicht zu entnehmen.

Einen hinsichtlich der konstruktiven Gegebenheiten ähnlichen Gaslaser behandelt auch das Dokument EP-A-0 059 229. Dasselbe enthält jedoch keine besonderen Vorkehrungen, die von einander abhängigen chemischen und physikalischen Vorgänge zu beeinflussen, wie sie bei der Gasentladung solcher elektrisch gepumpter $CO_2$-Laser auftreten und zu Veränderungen der Laserfunktion führen. Auch ist dieses Dokument lediglich im Sinne von Artikel 54 (3) EPÜ als zum Stand der Technik gehörend zu werten.

Aufgabe der Erfindung ist es, den gattungsgemässen Laser so zu verbessern, dass bei ihm eine möglichst unveränderte und stabile Laserfunktion, d.h. ein Gleichgewichtszustand möglichst aller Wechselwirkungen der Gase mit dem elektrischen und optischen Feld, der Materialien in den Gasräumen und -kammern sowie der Gase untereinander zu erzielen ist. Diese Aufgabe wird erfindungsgemäss durch die im Kennzeichen des Anspruchs 1 genannten Merkmale gelöst. Auf diese Weise kann eine saubere Zustandsform des Lasers, vor allem seines Inneren, erzielt werden, so dass das elektrische Entladen selbst bei extremen – insbesondere tiefen – Temperaturen, bei besonderen Anforderungen bezüglich Leistung, Energie, Wirkungsgrad, Pulsform und Wellenlänge, bei Gasmischungen mit ungünstiger Chemie, hohen Drücken und Pulsfolgefrequenzen sowie bei Betrieb ohne zusätzliche Vorionisation bzw. ohne zusätzliche Massnahmen, wie z.B. spezifische Gasbeimischungen, erleichtert und eine lange Lebensdauer erzielt wird.

Eine Weiterbildung der Erfindung sieht das Merkmal von Anspruch 2 vor, wobei die Funktion der hier erwähnten und entsprechend ausgebildeten Stoffe durch Druckänderungen verbessert werden kann.

Im vorstehendem Zusammenhang bieten sich als besonders vorteilhaft die Merkmale gemäss Anspruch 3 an. Cu- oder Ni-Oberflächen ermöglichen höhere Temperaturen.

Sofern man Rückreaktionen durchführen oder dieselben auch nur – da sie in der Regel träge verlaufen – beschleunigen möchte, ist eine Handhabung gemäss Anspruch 5 zweckmässig.

Weitere sinnvolle Massnahmen, durch die vor allem die für eine Entladung schädliche Negativ-Ionen-Bildung sowie die $O_2$- und $O_3$-Konzentrationen in vertretbaren Grenzen gehalten werden, sind Gegenstand der Ansprüche 6 und 7.

Wegen der Häufigkeit der $CO_2$-Dissoziation kann auch eine Ausgestaltung nach den Merkmalen des Anspruchs 8 vorteilhaft sein.

Beim Laser- bzw. Verstärkerbetrieb fallen Dissoziationsprodukte und Folgeverbindungen wie CO, $H_2O$, $O_2$, $O_3$ oder Stickoxide etc. an. Nach den Merkmalen der Ansprüche 9 und 10 können diese abgeführt und/oder gebunden werden, wobei bedarfsweise andere Gaskomponenten, z.B. Kohlendioxid, zugeführt werden.

Auch die restlichen Merkmale, die eine Vorrichtung zur Durchführung des erfindungsgemässen Verfahrens behandeln und Gegenstand der Ansprüche 11 bis 19 sind, sehen Weiterbildungen der Erfindung vor.

Im folgenden werden an Hand einer Zeichnung Ausführungsbeispiele der Erfindung näher erläutert, wobei die in den einzelnen Figuren einander entsprechenden Teile dieselben Bezugszeichen aufweisen. Es zeigt

Fig. 1 den Längsschnitt durch einen transversal angeregten Laser-Verstärker mit Gasspeicher bzw. Katalysator,

Fig. 2 einen Laser-Verstärker gemäss Fig. 1, jedoch mit longitudinal angeregtem Laser, der bei entsprechender Dimensionierung auch als Wellenleiterlaser aufgebaut sein kann,

Fig. 3 einen Querschnitt durch die Bauform gemäss Fig. 1 mit einer zusätzlichen, eine Innenauskleidung aufweisenden Kammer,

Fig. 4 eine Ansicht entsprechend Fig. 3 mit einer Kombination von Katalysator/Absorber und Heiz- bzw. Kühleinrichtung in der zusätzlichen Kammer,

Fig. 5 eine Ansicht entsprechend Fig. 2 mit einem heiz- und kühlbaren Absorber bzw. Katalysator,

Fig. 6 den Laser-Verstärker entsprechend Fig. 5 mit für die einzelnen Dissoziationsprodukte spezifischen Absorbern, Adsorbern, Filtern oder Membranen und

Fig. 7 bis 9 Schaltkreise für die elektrische Beheizung, Ausbildung und Anordnung eines Katalysators.

Fig. 1 zeigt die Prinzipskizze eines gestreckten, transversal angeregten Laser-Verstärkers 1, der hinsichtlich seiner Ansteuerungsart z.B. als CW-(continuous wave), RF- (radio frequency) oder als pulsbetriebener Laser ausgebildet sein kann. Sein Gehäuse 2 besteht aus einem symmetrischen Hohlkörper aus Metall, z.B. einem nichtmagnetischen Metall wie Aluminium, Kupfer, Wolfram, einer Legierung dieser Metalle oder einem ferromagnetischen Metall. Der Hohlkörper besitzt im wesentlichen Wannenform, bei dem an der Bodenseite und an dem Deckel 8 innenseitig je eine Elektrode 5 bzw. 6 befestigt ist.

Die Breite der Elektroden und ihr gegenseitiger Abstand können Millimeter (bei Wellenleiterbauform) oder Zentimeter und ihre Länge kann bis zu einige Dezimeter betragen. Die Breiten beider Elektroden können gleich oder unterschiedlich sein; in letzterem Fall können die Breiten der Elektroden 6 und 5 z.B. in einem Verhältnis von 4:5 bemessen sein und mit einer Spannung von bis zu 30 kV arbeiten. Hieraus ergeben sich Feldstärken von 10 bis 25 kV/cm und Energiedichten von 0,1 bis 0,5, also z.B. 0,25 joule/$cm^3$, Lasergas.

Mit 11 ist die Spannungszufuhr – z.B. eine Hochspannungszufuhr – an die Elektroden 5 und 6 bezeichnet, so dass in dem zwischen ihnen befindlichen Gas eine elektrische Entladung stattfinden kann, wodurch die $CO_2$-Gasmoleküle angeregt werden. Der hierfür erforderliche Schaltimpuls besitzt eine Halbwertsbreite von typisch < 100 nsec und eine Anstiegsflanke von typisch < 20 nsec. Durch die an den Stirnseiten 3 und 4 im Raum zwischen den Elektroden befestigte Resonatoranordnung 15 und 16 kann daraufhin optische Energie aus dem Gehäuse 2 ausgekoppelt werden. Elektrode 5 und Spannungszufuhr 11 sind gegenüber dem übrigen Gehäuse mittels des Isolators 12 elektrisch isoliert. Zwischen dem Isolator und der Elektrode 5 einerseits und zwischen der Elektrode 6 und dem Gehäuse 2 anderseits ist ein Stoff 13 mit einer oberflächenvergrössernden Struktur aufgebracht, der als Speicher oder Träger von Speichern und/oder Träger von Katalysatoren für feste flüssige oder gasförmige Lasergaskomponenten und/oder Katalysatoren dient.

Fig. 2 unterscheidet sich demgegenüber durch die senkrecht zur Längsachse des Gehäuses 2 – die auch die Auskoppelachse ist – angeordneten Elektroden 5', 6', 7'. Sie sind in – im Gehäuse 2 eingegossenen oder nachträglich gebohrten – Kanälen 18' befestigt und regen den Laser in longitudinaler Richtung an.

In Fig. 3 ist im wesentlichen ein Querschnitt des Laserverstärkers 1 gemäss Fig. 1 dargestellt, bei dem in der Längsachse des Gehäuses 2 noch eine z.B. am Deckel 8 befestigte Mittelelektrode 7 vorgesehen ist, deren Entladungsflächen 9, 10 den Entladungsflächen der Elektroden 5 und 6 zugekehrt sind. Dadurch entsteht ein einmal gefalteter Strahlengang. Bei anderen, zeichnerisch nicht dargestellten Ausführungsbeispielen ist auch eine mehrfache Faltung und entsprechend kürzere Bauform denkbar. Parallel zum Resonator- bzw. Entladungsraum 17 verläuft die angeformte oder auch nachträglich am Gehäuse 2 befestigte Kammer 18, die an ihren Innenwänden die Stoffschicht 13 mit parallel zur Längsachse verlaufenden, die gesamte Innenoberfläche vergrössernden Rillen 19 aufweist. Selbstverständlich sind auch andere flächenvergrössernde Massnahmen wie Kerben, Netze, Rohre, Löcher und dergleichen denkbar, die allesamt einer besseren Gasaufbereitung und -regeneration dienen. Als Materialien dieser Speicher oder Träger kommt Keramik, Quarz, (Quarz-) Glas, Metall, Sintermaterial, Ton-(erde), Porzellan, Al-Oxid oder Al-Silikat von hinreichend hoher spezifischer Oberfläche in Frage, während als Katalysator Wasser(stoff), Kohlenmonoxid, Formaldehyd, Alkohol, Karbonyl, Kupfer, Nickel, Platin, Titan, Palladium oder auch ein Gemisch von $MnO_2$/CuO möglich ist. Diese Katalysatoren oder auch Laserkomponenten oder weitere Speicher aus Edelmetallen – z.B. Titan –, Metalloxiden – z.B. $MnO_2$ und/oder CuO –, Kohle, Hydroxiden – z.B. Palladium-Hydroxid –, Karbonate – z.B. Silberkarbonat – oder Kombinationen von Edelmetallen und Metalloxiden und/oder wenigstens ein Teil der aktivierten Oberflächen mit CO und ein anderer Teil mit $O_2$ können in den Oberflächen der Speicher oder Träger z.B. durch Eindiffundieren, chemische Bindungen, Einbrennen, Aufdampfen, Flammstrahlen oder Plasmaspritzen befestigt sein. Über die Öffnung 20 stehen die beiden Kammern (Resonator- bzw. Entladungsraum 17 und Kammer 18) miteinander in Verbindung.

Gemäss Fig. 4 können in der Kammer 18 verschiedene Absorber 21 – bedarfsweise kombiniert mit einer Heiz- und/oder Kühleinrichtung 22 – Verwendung finden. Mit dieser Art von Heiz- bzw. Kühleinrichtung lassen sich, und zwar unabhängig von der Entladungsenergie, kurzzeitig oder über längere Betriebszyklen Volumen- und/oder Temperaturveränderungen des Gesamtdruckes innerhalb des Systems oder auch einzelner Partialdrücke, wie z.B. des Wasserstoffs oder Kohlenmonoxids, herbeiführen. Auch durch gezielte Zugaben z.B. von Kohlenmonoxid, Wasserdampf, Methan, Äthan, höhere Kohlenwasserstoffe, Karbonate, Karbonyle, Formaldehyde jeweils für sich oder in kombinierter Form mit einem oder mehreren dieser Stoffe – durch die Öffnung 20 hindurch – lassen sich die Druck-, Volumen- und Temperaturverhältnisse innerhalb des Resonator- bzw. Entladungsraums 17 beeinflussen.

In Fig. 5 wird ein aus Katalysator und Absorber 21 kombiniertes Element bei einem longitudinal angeregten Laserverstärker 1 verwendet, das nahe der Anode 7' und deren Spannungszufuhr 11 angeordnet ist. Mit diesem Element lassen sich Kohlenstoff in Kohlendioxid oder auch Stickoxide in Stickstoff überführen. Der Katalysator kann hierbei z.B. ein metallischer und der Absorber ein Wasserabsorber, etwa aus keramischem $TiO_2$/ $MnO_2$-CuO oder Pt auf Aluminiumoxid, sein.

Druck-, Volumen- und Temperaturverhältnisse und die Abfuhr von Dissoziationsprodukten lassen sich aber auch durch im Entladungs- bzw. Resonatorraum 17 gemäss Fig. 6 oder aber auch in einer – etwa gemäss den Fig. 3 und 4 – mit diesem Raum verbundenen Kammer gespeichertes $CO_2$-(Laser) Gas oder Komponenten – gasförmige und/ oder chemisch gebundene und/oder physikalisch gebundene Gase, z.B. Kohlendioxid, Wasser(stoff), Helium – beeinflussen. Diese Stoffe können aus dem Speicher 19 über die Düse 23 z.B. unter Druck und/oder gegebenenfalls über eine Temperaturbeeinflussung und/oder eine Diffusion fortlaufend oder stossweise dem Entladungs- bzw. Resonatorraum zugeführt bzw. die Dissoziationsprodukte entsprechend abgeführt werden. Die Absorber 21 – auch Adsorber, Filter oder Membranen – für diese Dissoziationsprodukte sind hierbei ganz spezifischer Natur.

In den Fig. 7 bis 9 ist schliesslich noch eine Möglichkeit aufgezeigt, die unabhängig von der oder zusätzlich zu der in den vorausgehenden Ausführungsbeispielen behandelten Gaschemie eine Rückreaktion von CO und $O_2$ in $CO_2$ bewirkt. Hierzu ist in Fig. 7 der hochohmige Koppelwiderstand $R_{Koppel}$ in Form eines Drahtes 24 vorgesehen, der parallel zu der durch die Elektroden 5 und 6 gebildeten Entladungsstrecke verläuft. In Fig. 7 ist der Koppelwiderstand 24 selbst als Katalysator ausgebildet. In Fig. 8 ist dieser Katalysator beispielsweise in Form eines gleichfalls parallel zur Entladungsstrecke verlaufenden Widerstandes $R_{Kat}$ mit der Bezugszahl 25 vorgesehen, während in Fig. 9 – sozusagen in Umkehrung zu Fig. 7 – der Katalysator selbst als Koppelwiderstand ausgebildet ist. In den drei letztgenannten Ausführungsbeispielen wird bei jeder Ent- bzw. Aufladung mit einem geringen Teil der Ladeenergie der Katalysator beheizt. Der den Ladestrom begrenzende Schutzschalter $R_L$ mit der Bezugszahl 26 kann – in Abwandlung der Ausführungsbeispiele gemäss Fig. 8 und 9 – auch anstelle des Katalysators 25 treten. Mit der Bezugszahl 27 ist der Pulsschalter und mit 28 ein Speicherkondensator bezeichnet. Die aufgezeigten Schaltkreise sind nur beispielhaft angeführt. Grundsätzlich sind alle für den Betrieb eines Laser typischen Schaltkreise (Blümleinkreis und dergleichen) denkbar.

Als Beispiel verschiedener möglicher Reaktionen von im Lasergas zusammengemischter bzw. entstehender Gase wie He, $CO_2$, $N_2$, CO, $H_2O$, OH, $CH_4$, $O_2$, $O_3$, Karbonyle, Stickoxide usw. seien die Dissoziation und die darauf folgenden Reaktionen des $CO_2$ Moleküls herausgegriffen:

$$CO_2 + e^- \rightarrow CO + O + e^-$$
$$CO + Ni \rightarrow Ni(CO)_4$$
$$CO + e^- \rightarrow C + O$$
$$O + e^- \rightarrow O^-$$
$$N_2 + 2O \rightarrow 2\,NO$$
$$H_2 + O \rightarrow H_2O$$
$$H_2O \rightarrow OH + H$$
$$C + 4H \rightarrow CH_4$$

Diese Dissoziationen und Folgereaktionen treten so häufig auf, dass sie – ohne besondere Massnahmen zur Rückführung der Reaktionen – direkt die Lebensdauer eines abgeschlossenen (sealed-off) Lasers bestimmen. So können z.B. $10^{16}$ $CO_2$-Moleküle pro Sekunde und pro $cm^3$ Volumen dissoziieren. Ähnlich treten auch bei anderen Molekülen Reaktionsabläufe ein. Um die verschiedenen zu Gaszersetzungen und Entmischungen führenden Reaktionen zu verhindern, wurde der erfindungsgemässe Laser entwickelt, der in der oder den Laserkammern Körper mit oberflächenvergrössernden Strukturen vorsieht, die selbst als Speicher oder als Träger für Speicher von den Gleichgewichtszustand der Laserfunktion ermöglichenden Katalysatoren dienen.

Wird der $CO_2$-Gaslaser nicht als Verstärker sondern als Sender verwendet, müssen die Spiegel 15 und 16 durch Abschlussfenster ersetzt werden, die für die Strahlung durchlässig sind. Im Verstärkerbetrieb wird unmittelbar nach der zwischen den Elektroden stattfindenden Entladung ein Puls durch eines dieser Fenster in das vorhandene Medium hineingeschossen, der in der Regel ein schöneres Strahlprofil und eine geringere Leistung besitzt. Der dann das Gehäuse durch das andere Fenster verlassende Gesamtimpuls ist um etwa 3 bis 10% verstärkt.

**Patentansprüche**

1. Verfahren zum Betreiben eines $CO_2$-Gaslasers innerhalb eines geschlossenen Gehäuses, das mit einer die elektrische Entladung bewirkenden Elektronik, einer Spannungszufuhr, einem Entladungsraum und mit diesem bedarfsweise verbindbaren zum Teil kammerförmig ausgebildeten zusätzlichen Räumen, mit oberflächenvergrössernde poröse Strukturen aufweisenden Stoffen als Speicher sowie mit einer bedarfsweisen Einstellmöglichkeit des Gesamtdruckes oder der Partialdrücke der einzelnen Lasergaskomponenten mit Hilfe von Temperaturveränderungen versehen ist, dadurch gekennzeichnet, dass die Stoffe mit hoher spezifischer Oberfläche wenigstens teilweise mit Lasergaskomponenten, z.B. CO und/oder $O_2$, stabilisiert und als Träger von Katalysatoren ausgebildet werden.

2. Verfahren nach Anspruch 1, dadurch gekennzeichnet, dass mit den stabilisierten Stoffen hoher spezifischer Oberfläche die Innenwände wenigstens teilweise ausgekleidet werden.

3. Verfahren nach Anspruch 1 und 2, dadurch gekennzeichnet, dass mit Rillen (19), Kerben, Netzen, Rohren oder Löchern versehene Stoffe verwendet werden (Fig. 3).

4. Verfahren nach einem der vorausgehenden Ansprüche, dadurch gekennzeichnet, dass

a) als zu aktivierende Oberflächen Keramik, Quarz, (Quarz-) Glas, Metall, Sintermaterialien, Ton, Porzellan, Al-Oxid oder Al-Silikat verwendet werden,

b) die genutzten Oberflächen mit – z.B. eindiffundierten, chemisch gebundenen, eingebrannten oder durch Aufdampfen, Flammstrahlen oder Plasmaspritzen aufgebrachten – Katalysatoren oder Lasergaskomponenten oder mit weiteren Speichern versehen werden,

c) als weitere Speicher bzw. Katalysatoren Edelmetalle, Metalle, Metalloxide, Kohle, Hydroxide, Karbonate oder Kombinationen von Edelmetallen und Metalloxiden verwendet werden und

d) als Katalysator Wasser, Wasserstoff, Kohlenmonoxid, Formaldehyd, Alkohol, Karbonyl, Kupfer, Nickel, Titan, oder ein Gemisch von $MnO_2/CuO$ verwendet wird.

5. Verfahren nach einem der vorausgehenden Ansprüche, dadurch gekennzeichnet, dass

a) Wasserstoff durch Gasmischung und/oder Speicherung – z.B. in Palladium oder Titan – auf etwa 0,2 bis 15 Volumenprozent und ein Wasserdampfdruck von etwa 0,1 bis 10 Torr eingestellt wird und/oder

b) Kohlenmonoxid von etwa 1 bis 20 und/oder Wasserdampf von etwa 0,1 bis 10 und/oder Methan und/oder Äthan und/oder höhere Kohlenwasserstoffe zusammen bis etwa 10 Volumenprozent und/oder Karbonate und/oder Karbonyle und/oder Formaldehyd in polymerisierter – z.B. in Keramik eingelagerter – Form zugegeben werden.

6. Verfahren nach einem der vorausgehenden Ansprüche, dadurch gekennzeichnet, dass

a) für eine definierte Leckrate eines zuzuführenden Gases ein im Verhältnis zum Laservolumen kleines Druckvolumen – z.B. He mit einigen Bar Druck – in der Laserkammer vorgesehen wird und/oder

b) durch Zugabe von CO im Zusammenwirken mit $H_2$ und/oder atomarem Wasserstoff und/oder Wasser und/oder Hydroxyl das chemische Gleichgewicht in Richtung $CO_2$-Moleküle verschoben wird und

c) als dosierbare Gaszufuhr ein Ventil oder ein poröser Festkörper – z.B. Keramik – verwendet wird.

7. Verfahren nach Anspruch 1 oder einem der folgenden, dadurch gekennzeichnet, dass die Druck- und/oder Temperaturveränderungen kurzzeitig oder während längerer Betriebszyklen mit Hilfe von Kühleinrichtungen (22) eingestellt werden (Fig. 4 und 5).

8. Verfahren nach einem der vorausgehenden Ansprüche, dadurch gekennzeichnet, dass

a) zum Überführen von Kohlenstoff und Kohlenmonoxid in Kohlendioxid und/oder von Stickoxiden in Stickstoff ein aus einem Katalysator und einem Absorber kombiniertes und zumindest teilweise aus Metall – z.B. Nickel – und Keramik – z.B. $TiO_2/MnO_2$-CuO – bestehendes Element (21) verwendet wird und

b) bedarfsweise das Element (21) nahe der Anode (7′) der Spannungszufuhr (11) betrieben wird.

9. Verfahren nach Anspruch 1 oder einem der folgenden Ansprüche, dadurch gekennzeichnet, dass im Entladungs- bzw. Resonatorraum (17) und/oder der mit ihm verbundenen Kammer (18) Lasergas oder Komponenten – gasförmige und/oder chemisch gebundene und/oder physikalisch gebundene Gase, z.B. Kohlendioxid, Wasserstoff, Wasser, Helium – gespeichert und – z.B. durch Diffusion und/oder Druck und/oder Temperatur – fortlaufend oder stossweise dem Entladungs- bzw. Resonatorraum zugeführt werden.

10. Verfahren nach einem der vorausgehenden Ansprüche, dadurch gekennzeichnet, dass die beim Laser- bzw. Verstärkerbetrieb anfallenden Dissoziationsprodukte und deren Folgeverbindungen durch Katalysatoren/Absorber (21) und/oder Filter und/oder Adsorber und/oder Membranen fortlaufend oder stossweise abgeführt und/oder chemisch gebunden und/oder physikalisch gebunden werden und andere Gaskomponenten, z.B. Kohlendioxid, zugeführt werden.

11. Vorrichtung zur Durchführung des Verfahrens nach einem der vorausgehenden Ansprüche, bei der der Entladungsraum (17) im Bereich seiner von elektrisch und optisch wirksamen Elementen (5, 6, 7, 15, 16) freien Innenwände des Gehäuses (2) mit einem oberflächenvergrössernde poröse Strukturen aufweisenden Stoff (13) als Katalysator versehen ist, dadurch gekennzeichnet, dass wenigstens der eine Katalysator und ein Absorber vorgesehen sind.

12. Vorrichtung zur Durchführung des Verfahrens nach einem der Ansprüche 1 bis 10, bei der die parallel zum Entladungsraum (17) verlaufende und über Öffnungen (20) mit ihm verbundene Kammer (18) im Bereich ihrer von elektrisch und optisch wirksamen Elementen (5, 6, 7, 15, 16) freien Innenwände des Gehäuses (2) mit einem oberflächenvergrössernde poröse Strukturen aufweisenden Stoff (13) als Katalysator versehen ist, dadurch gekennzeichnet, dass wenigstens der eine Katalysator und ein Absorber vorgesehen sind.

13. Vorrichtung nach Anspruch 11 oder 12, dadurch gekennzeichnet, dass auch ein Absorber in Form einer Auskleidung vorgesehen ist.

14. Vorrichtung nach einem der Ansprüche 11 bis 13, dadurch gekennzeichnet, dass auch ein Filter vorgesehen ist.

15. Vorrichtung nach einem der Ansprüche 11 bis 14, dadurch gekennzeichnet, dass eine Membrane (21) vorgesehen ist.

16. Vorrichtung nach einem der Ansprüche 11 bis 15, dadurch gekennzeichnet, dass eine Kühleinrichtung (22) vorgesehen ist.

17. Vorrichtung nach einem der Ansprüche 11 bis 16, dadurch gekennzeichnet, dass zum Zweck einer dosierbaren Gaszufuhr im Entladungs- bzw. Resonatorraum (17) oder in der mit ihm verbundenen Kammer (18) wenigstens ein Element zur Gasspeicherung untergebracht ist.

18. Vorrichtung nach einem der Ansprüche 12 bis 16, dadurch gekennzeichnet, dass zum Zweck einer dosierbaren Gaszufuhr im Entladungs- bzw. Resonatorraum (17) die mit ihm verbundene Kammer (18) als Gasspeicher ausgebildet ist.

19. Vorrichtung nach einem der Ansprüche 11 bis 18, dadurch gekennzeichnet, dass der Katalysator (25) oder eine für sich bekannte Heizung als hochohmiger, parallel zur Entladestrecke verlaufender Widerstand ausgebildet ist (Fig. 7 bis 9).

**Claims**

1. A method of operating a $CO_2$ gas laser within a closed housing equipped with an electronic system for electric discharge, a voltage supply, a discharge chamber and additional spaces, partly in the form of chambers, which can be connected to the discharge chamber if required, with substances having porous structures to increase the surface area as storage means and with means for

adjusting as required the total pressure or the partial pressures of the individual laser gas components by means of temperature changes, characterised in that the substances with high specific surface area are at least partly stabilised with laser gas components, e.g. CO and/or $O_2$, and are in the form of catalyst carriers.

2. A method according to claim 1, characterised in that the internal walls are at least partly lined with the stabilised substances of high specific surface area.

3. A method according to claims 1 and 2, characterised in that substances having grooves (19), notches, meshes, tubes or perforations are used (Figure 3).

4. A method according to one of the preceding claims, characterised in that:

a) ceramics, quartz, (quartz-)glass, metal, sintered materials, clay, porcelain, aluminium oxide or aluminium silicate are used as surfaces to be activated,

b) the surfaces used are equipped with catalysts or laser gas components incorporated e.g. by diffusion, chemically bound, staving or applied by vapour deposition, flame jetting or plasma spraying, or are equipped with additional storage substances,

c) the additional storage substances or catalysts used are noble metals, metals, metal oxides, carbon, hydroxides, carbonates or combinations of noble metals and metal oxides, and

d) the catalysts used are water, hydrogen, carbon monoxide, formaldehyde, alcohol, carbonyl, copper, nickel, titanium or a mixture of $MnO_2$/CuO.

5. A method according to one of the preceding claims, characterised in that:–

a) hydrogen is adjusted to a vapour pressure of about 0.1 to 10 Torr and to about 0.2 to 15 percent by volume by admixture of gases and/or storage, e.g. in palladium or titanium, and/or

b) carbon monoxide in a quantity of about 1 to 20 percent by volume and/or water vapour in a quantity of about 0.1 to 10 percent by volume and/or methane and/or ethane and/or higher hydrocarbons together amounting to about 10 percent by volume and/or carbonates and/or carbonyls and/or formaldehyde are added in a polymerised form, e.g. embedded in ceramics.

6. A method according to one of the preceding claims, characterised in that:–

a) a pressure volume which is small in proportion to the laser volume, e.g. He with a pressure of a few bar, is provided in the laser chamber for a specified leakage rate of a gas to be supplied, and/or

b) the chemical equilibrium is shifted in the direction of $CO_2$ molecules by the addition of CO in combination with $H_2$ and/or atomic hydrogen and/or water and/or hydroxyl, and

c) a valve or a porous solid, e.g. ceramics, is used as a meterable gas feed.

7. A method according to claim 1 or one of the following claims, characterised in that the changes in pressure and/or temperature are adjusted by means of cooling devices (22) for a short time or for prolonged operating cycles (Figures 4 and 5).

8. A method according to one of the preceding claims, characterised in that:–

a) an element (21) composed of a combination of a catalyst and absorber and consisting at least partly of metal, e.g. nickel, and ceramics, e.g. $TiO_2$/$MnO_2$-CuO, is used for the conversion of carbon and carbon monoxide into carbon dioxide and/or of nitrogen oxide into nitrogen, and

b) the element (21) is operated close to the anode (7') of the voltage supply (11) if required.

9. A method according to claim 1 or one of the following claims, characterised in that laser gas or components (gaseous and/or chemically bound and/or physically bound gases, e.g. carbon dioxide, hydrogen, water, helium) are stored in the discharge or resonator chamber (17) and/or in the chamber (18) connected thereto and are continuously or intermittently supplied to the discharge or resonator chamber, e.g. by diffusion and/or pressure and/or temperature.

10. A method according to one of the preceding claims, characterised in that the dissociation products resulting from the laser or amplifier operation and the secondary compounds of the dissociation products are removed continuously or intermittently by catalysts/absorbers (21) and/or filters and/or adsorbers and/or membranes and/or are chemically bound and/or physically bound and other gas components, e.g. carbon dioxide, are supplied.

11. Apparatus for carrying out the method according to one of the preceding claims, in which the discharge chamber (17) is provided with a material (13) having porous structures increasing its surface area to serve as catalyst in the region of the internal walls of its housing (2) which are free from electrically and optically active elements (5, 6, 7, 15, 16), characterised in that at least one catalyst and an absorber are provided.

12. Apparatus for carrying out the method according to one of claims 1 to 10, in which the chamber (18) which extends parallel to the discharge chamber (17) and is connected thereto by openings (20) is provided with a substance (13) having porous structures increasing its surface area to serve as catalyst in the region of the internal walls of the housing (2) which are free from electrically and optically active elements (5, 6, 7, 15, 16), characterised in that at least the one catalyst and an absorber are provided.

13. Apparatus according to claim 11 or 12, characterised in that an absorber in the form of a lining is also provided.

14. Apparatus according to one of claims 11 to 13, characterised in that a filter is also provided.

15. Apparatus according to one of claims 11 to 14, characterised in that a membrane (21) is provided.

16. Apparatus according to one of claims 11 to 15, characterised in that a cooling device (22) is provided.

17. Apparatus according to one of claims 11 to 16, characterised in that at least one element for

gas storage is accommodated in the discharge or resonator chamber (17) or in the chamber (18) connected therewith for the purpose of a meterable gas feed.

18. Apparatus according to one of the claims 12 to 16, characterised in that a gas storage means is formed in the chamber (18) connected to the discharge or resonator chamber (17) for the purpose of a meterable gas feed.

19. Apparatus according to one of the claims 11 to 18, characterised in that the catalyst (25) or a heating means known per se is provided in the form of a resistor with high ohmic resistance extending parallel to the discharge path (Figures 7 to 9).

**Revendications**

1. Procédé d'utilisation d'un laser à gaz $CO_2$ à l'intérieur d'un boîtier (2) fermé comportant un dispositif électronique provoquant la décharge électrique, une alimentation (11), un volume de décharge (17) et au besoin des enceintes supplémentaires en partie en forme de chambre, pouvant être reliées au volume de décharge, contenant des matières servant d'accumulateurs, de structure poreuse et augmentant la surface, ainsi qu'au besoin une possibilité de régler la pression totale ou les pressions partielles des différents constituants du gaz de laser à l'aide de variations de températures, caractérisé en ce que les matières de surface spécifique élevée sont stabilisées au moins partiellement avec des constituants de gaz laser, par exemple CO et/ou $O_2$, et servent de supports de catalyseurs.

2. Procédé selon la revendication 1, caractérisé en ce que les parois intérieures sont revêtues au moins partiellement des matières stabilisées de surface spècifique élevée.

3. Procédé selon la revendication 1 et 2, caractérisé en ce que l'on utilise des matières pourvues de rainures (19), d'entailles, de réticules ou de trous (figure 3).

4. Procédé selon l'une des revendications 1 à 3, caractérisé en ce que:

(a) on utilise comme surfaces activantes de la céramique, du quartz, du verre (du quartz), un métal, des matériaux frittés, de l'argile, de la porcelaine, de l'oxyde d'Al ou du silicate d'Al,

(b) les surfaces utilisées sont pourvues de catalyseurs ou de constituants de gaz laser ou d'autres accumulateurs – appliqués par exemple par diffusion, liaison chimique, cuisson ou par évaporation, au chalumeau ou pulvérisation de plasma –

(c) l'on utilise comme autre accumulateur ou catalyseur des métaux précieux, des métaux, des oxydes métalliques, du charbon, des hydroxydes, des carbonates ou des combinaisons de métaux précieux et d'oxydes métalliques, et

(d) en ce que l'on utilise comme catalyseur de l'eau, de l'hydrogène, du monoxyde de carbone, du formaldéhyde, de l'alcool, du carbonyle, du cuivre, du nickel, du titane, ou un mélange de $MnO_2/CuO$.

5. Procédé selon l'une des revendications 1 à 4, caractérisé en ce que:

(a) on amène l'hydrogène par mélange de gaz et/ou accumulation – par exemple dans du palladium ou du titane – à environ 0,2 à 15% en volume et on règle une pression de vapeur d'eau d'environ 0,1 à 10 Torr et/ou

(b) on ajoute du monoxyde de carbone de 1 à 20 environ et/ou de la vapeur d'eau de 0,1 à 10 environ et/ou du méthane et/ou de l'éthane et/ou des hydrocarbures supérieures jusqu'à environ 10 pour cent en volume et/ou des carbonates et/ou des carbonyles, et/ou du formaldéhyde sous forme polymérisée – par exemple par insert dans de la céramique.

6. Procédé selon l'une des revendications 1 à 5, caractérisé en ce que:

(a) on prévoit dans la chambre laser pour un taux de fuite défini un gaz d'alimentation, un volume de pression faible par rapport au volume du laser, – par exemple He avec une pression de quelques bars – et/ou

(b) on déplace l'équilibre chimique en direction des molécules $CO_2$ par addition de CO en coopération avec $H_2$ et/ou hydrogène atomique et/ou eau et/ou hydroxyle et

(c) on utilise comme alimentation dosable en gaz une vanne ou un corps solide poreux – par exemple de la céramique.

7. Procédé selon l'une des revendications 1 à 6, caractérisé en ce que l'on règle les variations de pression et/ou de température, à l'aide de dispositifs de refroidissement (22) pendant de courtes durées ou pendant des cycles de fonctionnement longs (figures 4 et 5).

8. Procédé selon l'une des revendications 1 à 7, caractérisé en ce que:

(a) pour transformer le carbone et le monoxyde de carbone en dioxyde de carbone et/ou les oxydes d'azote en azote, on utilise un élément (21) résultant de la combinaison d'un catalyseur et d'un absorbeur et constitué au moins en partie de métal – par exemple du nickel et de céramique, par exemple $TiO_2/MnO_2$-CuO – et

(b) au besoin l'élément (21) fonctionne à proximité de l'anode (7') de l'alimentation (11).

9. Procédé selon l'une des revendications 1 à 8, caractérisé en ce que l'on accumule dans le volume de décharge ou de résonateur (17) et/ou dans la chambre 18 reliée à ce volume (17), du gaz laser ou des constituants – gaz et/ou des gaz fixés chimiquement et/ou liés physiquement, par exemple du dioxyde de carbone, de l'hydrogène, de l'eau, de l'hélium – et on les introduit en permanence ou par intermittence dans le volume de décharge ou de résonateur – par exemple par diffusion et/ou pression et/ou température.

10. Procédé selon l'une des revendications 1 à 9, caractérisé en ce que les produits de dissociation résultant du fonctionnement du laser ou de l'amplificateur et leurs composés dérivés sont éliminés par des catalyseurs/absorbeurs (21) et/ou des filtres et/ou des absorbants, et/ou des membranes, en permanence ou par intermittence et/ou sont fixés chimiquement et/ou liés physiquement

et ajoutés à d'autres constituants du gaz, par exemple du dioxyde de carbone.

11. Dispositif de mise en œuvre du procédé selon l'une des revendications 1 à 10 dans lequel le volume de décharge (17) est pourvu d'une matière (13) servant de catalyseur, de structure poreuse, agrandissant la surface, dans la zone des parois intérieures et son boîtier 2, ne présentant pas d'éléments (5, 6, 7, 15, 16) actifs électriquement et optiquement, caractérisé en ce qu'il est prévu au moins un catalyseur et un absorbeur.

12. Dispositif de mise en œuvre du procédé selon l'une des revendications 1 à 10, dans lequel la chambre (18) parallèle au volume de décharge (17) et reliée à celui-ci par les ouvertures (20) est pourvue d'une matière (13), de structure poreuse, agrandissant la surface, dans la zone des parois intérieures de son boîtier (2) ne présentant pas d'éléments (5, 6, 7, 15, 16) actifs électriquement et optiquement, caractérisé en ce qu'il est prévu au moins un catalyseur et un absorbeur.

13. Dispositif selon la revendication 11 ou 12, caractérisé en ce qu'il est prévu aussi un absorbeur sous la forme d'un revêtement.

14. Dispositif selon l'une des revendications 11 à 13, caractérisé en ce qu'il est prévu aussi un filtre.

15. Dispositif selon l'une des revendications 11 à 14, caractérisé en ce qu'il est prévu une membrane (21).

16. Dispositif selon l'une des revendications 11 à 15, caractérisé en ce qu'il est prévu un dispositif de refroidissement (22).

17. Dispositif selon l'une des revendications 11 à 16, caractérisé en ce qu'un élément au moins d'accumulation de gaz est prévu dans le volume de décharge ou de résonateur (17) ou dans la chambre (18) reliée à ce volume (17), afin de doser l'alimentation en gaz.

18. Dispositif selon l'une des revendications 12 à 16, caractérisé en ce que la chambre (18) reliée au volume de décharge ou de résonateur (17) est un accumulateur de gaz, afin de doser l'alimentation en gaz de ce volume (17).

19. Dispositif selon l'une des revendications 11 à 18, caractérisé en ce que le catalyseur (25) ou un chauffage connu en soi est une résistance de valeur ohmique élevée, parallèle au parcours de décharge (figures 7 à 9).

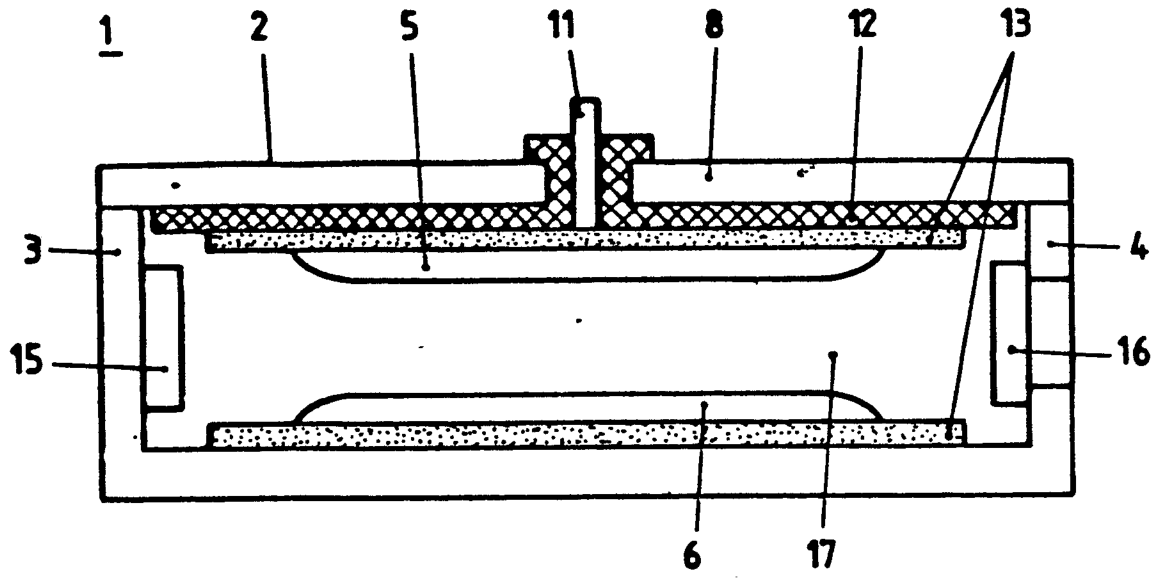


Fig. 1

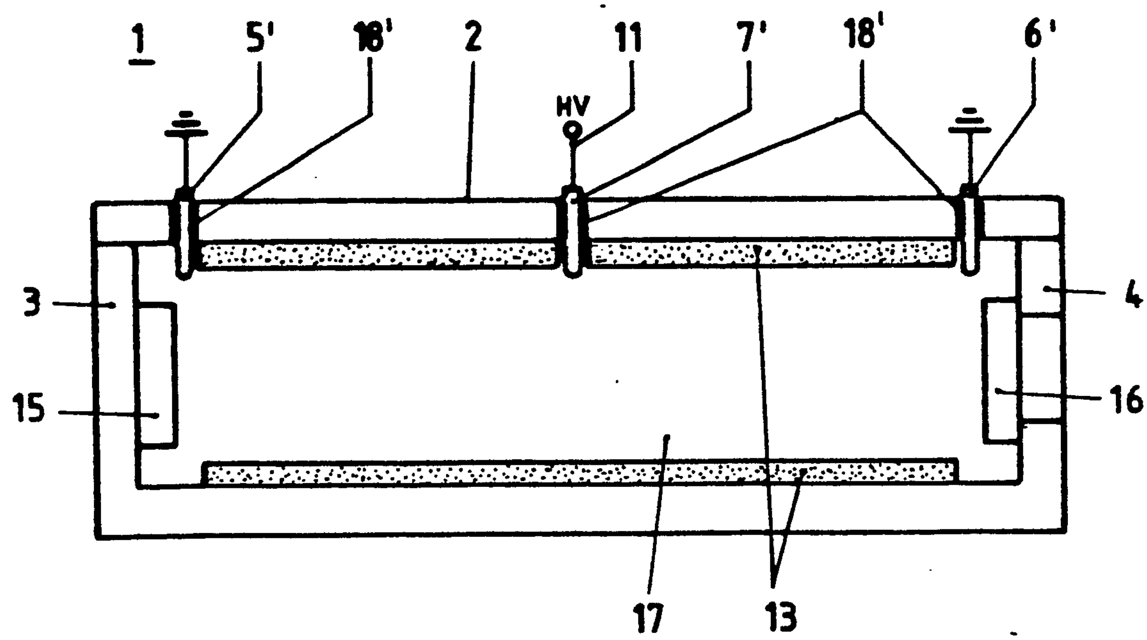


Fig.2

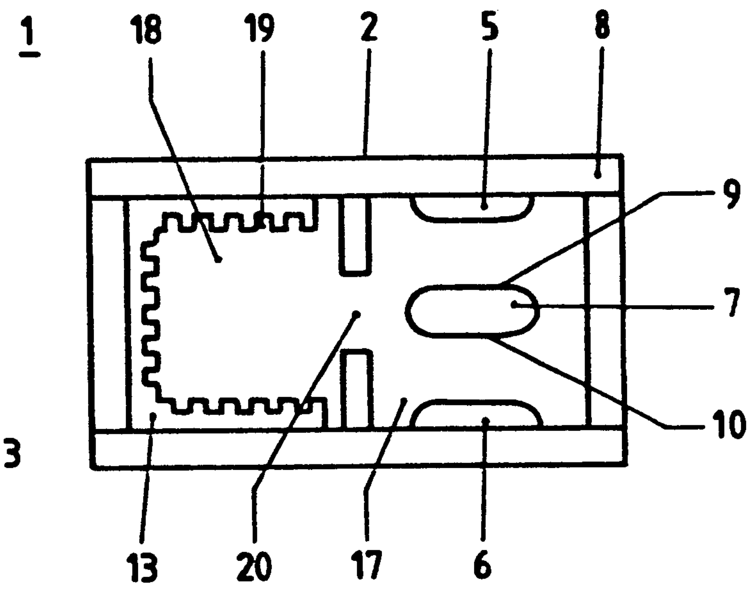


Fig. 3

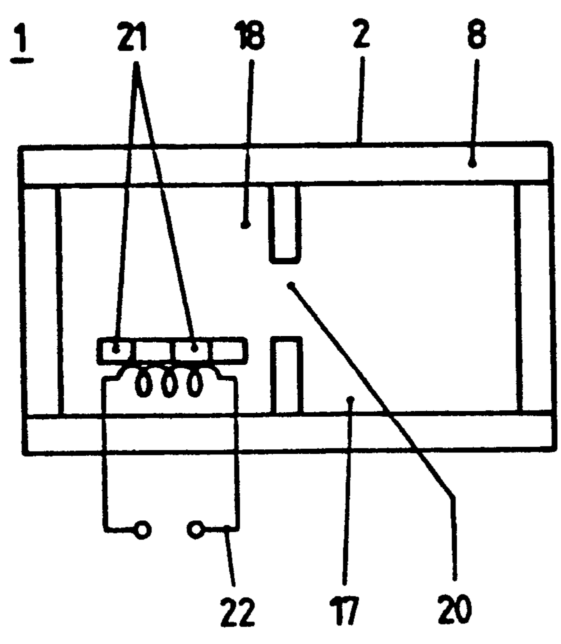


Fig. 4

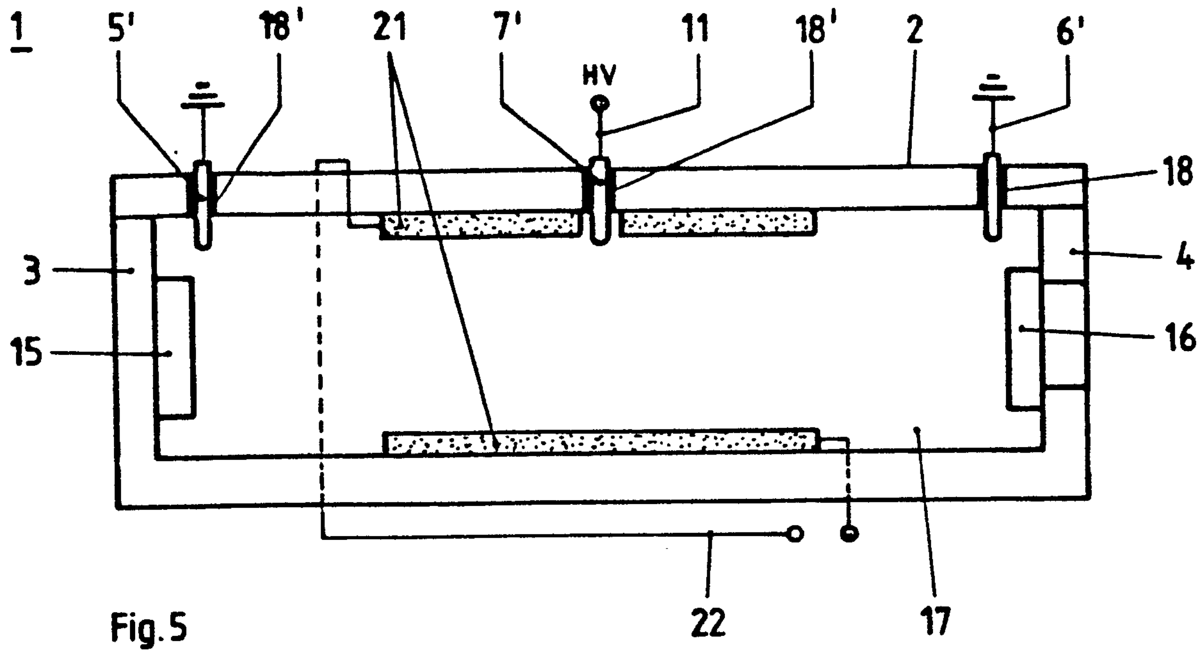
1
5'
18'
21
7'
11
18'
2
6'
HV
18
3
4
15
16
22
17

Fig. 5

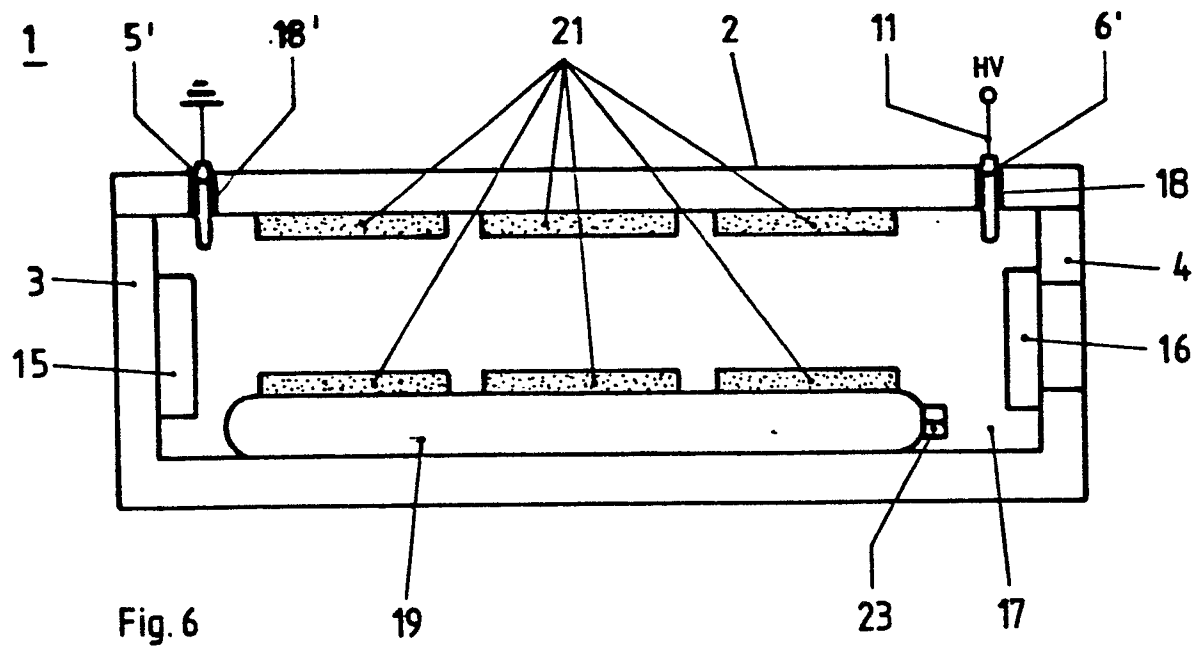
1
5'
18'
21
2
11
6'
HV
18
3
4
15
16
19
23
17

Fig. 6

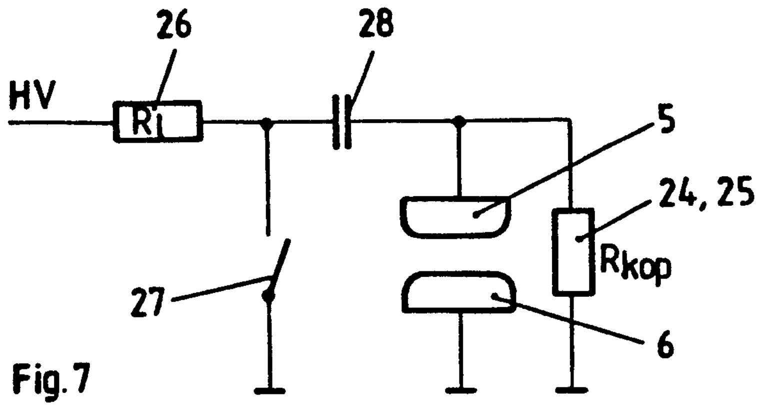


Fig. 7

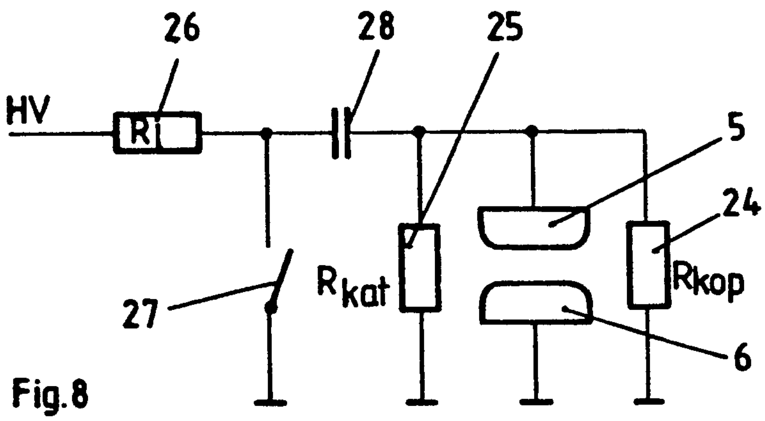


Fig. 8

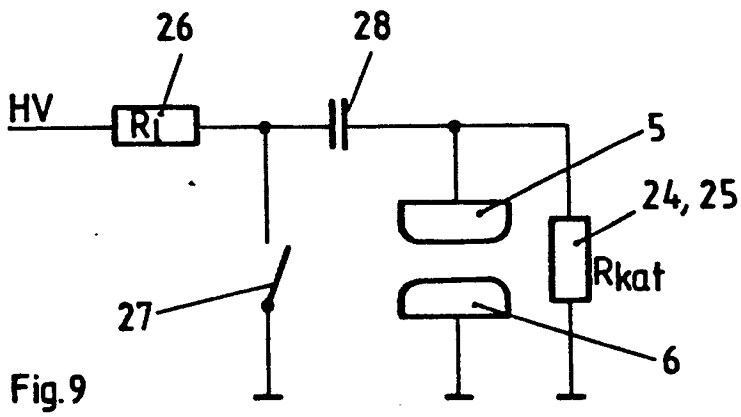


Fig. 9